# EUROPEAN PATENT APPLICATION

(11) **EP 1 082 984 A2**
(43) Date of publication of application: **14.03.2001**
(21) Application number: 00307813.6
(22) Date of filing: 11.09.2000
(51) Int. Cl.: A63F 13/10

(54) **Entertainment system which correlates a role-playing game and a simulation game**

(30) Priority: 10.09.1999 JP 25779299
(71) Applicant: Sony Computer Entertainment Inc., Tokyo 107-0052 (JP)
(72) Inventor: Hino, Akihiro, Omuta-shi, Fukuoka 837-0916 (JP); Motomura, Kentaro, c/o Sony Computer Entertain.Inc, Tokyo 107-0052 (JP)
(74) Representative: Turner, James Arthur

(57) **Abstract**

In a role-playing game, a player is allowed to play a simulation game to construct his/her own world. A world (diorama) created by the simulation game and the world of the role-playing game are linked with each other. As a result, the player can enjoy a game of an unprecedented type. Specifically, a game is configured in such a manner that an object (e.g., a building) can be constructed in a diorama by using an element that is obtained while the player plays the role-playing game according to a scenario.

## Description

This application claims a priority based on Japanese Patent Application No. 11-257792, filed on September 10, 1999, the entire contents of which are incorporated herein by reference for all purposes.

### BACKGROUND OF THE INVENTION

The present invention relates to a type of video game in which a player proceeds with a scenario by operating a controller to instruct a character how to act in game pictures, the character being assigned to the player.

A role-playing game is a game in which a scenario progresses as a player instructs a character (player character) in game pictures how to act, the character being assigned to the game player, by operating a controller that is connected to an entertainment system. There is known a game as this type, for example, the subject of which is to achieve a final goal by allowing the player character to grow with experiences of fights, etc., against opponent characters.

### SUMMARY OF THE INVENTION

Although there are some variations in many of role-playing games, they are generally common in having a final goal of defeating a boss of the opponent characters. Since contents of a scenario to reach the final goal are determined in advance, many players may follow similar processes. Therefore, role-playing games produced according to a concept that is similar to conventional ones may be less attractive to players who have already experienced a great number of role-playing games.

An object of the present invention is to provide a game that is attractive and enjoyable to players who have already experienced a great number of role-playing games, by providing a world that is unique to the player in the role-playing game.

In order to attain the above object, in the present invention, the player is allowed to play a simulation game to construct his/her own world in the role-playing game. A world created by the simulation game and the world of the role-playing game are linked with each other. As a result, the player can enjoy a game of an unprecedented type.

Specifically, the inventors of the present invention have invented an entertainment system for proceeding with a game according to operations of a player that are accepted through an operating device, comprising role-playing game providing means for providing a game of such a type that the game proceeds according to a scenario as a player manipulates a character that is assigned to the player; simulation game providing means for providing a game of such a type that a world unique to the player is created by placing, in a virtual world, an object that is a component of the virtual world; and game control means for proceeding with the two games in parallel in such a manner that the two games are correlated with each other.

An originality of the player may be presented better, if a terrain of the world created by the above simulation game can be altered according to a player's instruction.

Here, the role-playing game relates to the simulation game, for example, in the following manner. The game control means allows the simulation game providing means to use an element that is necessary to place an object, as a component of the virtual world, the element being given to the player by the role-playing game providing means, and the simulation game providing means presents the element to the player in a selectable manner.

The object and the element corresponding to the object may be in either a one-to-one relationship or a one-to-plural relationship.

The above simulation game providing means may refer to data that relates the object with a character, the object being a component of the virtual world, so as to make the related character thus related appear on the scene at the time when the object is placed on the virtual world according to the player's operation.

### BRIEF DESCRIPTION OF THE DRAWINGS

Fig. 1 is a functional block diagram of the main part of an entertainment system according to an embodiment of the present invention;
Fig. 2 illustrates two worlds that are provided in the embodiment;
Fig. 3 is a conceptual diagram showing a relationship between a role-playing game and a simulation game in the embodiment;
Figs. 4A-4C show game pictures that are displayed when selectable objects are displayed, and an object is constructed according to a selection;
Fig. 5 shows an illustration of storage contents of a storing means;
Fig. 6 shows how sub-scenario files are referred to in a process of proceeding with a role-playing game;
Fig. 7 shows an illustration of storage contents of an obtained elements table;
Fig. 8 shows an example of storage contents of an object-element correspondence table;
Fig. 9 shows an example of storage contents of an object table;
Fig. 10 is a flowchart showing a flow of operation that a simulation game executing means places an object in a diorama;
Figs. 11A-11C show game pictures that are displayed when a player edits a terrain of a diorama;
Fig. 12 illustrates examples of fight in which the terrain is taken into consideration in the fighting scene in which a player character defeats an opponent character;
Figs. 13 illustrates examples of fight in which the terrain is taken into consideration in the fighting scene in which a player character defeats an opponent character;
Figs. 14 illustrates examples of fight in which the terrain is taken into consideration in the fighting scene in which a player character defeats an opponent character;
Fig. 15 shows an example of an appearance of the entertainment system capable of implementing the embodiment of the present invention; and
Fig. 16 shows an outlined, example of a hardware configuration of the entertainment system capable of implementing the embodiment of the present invention.

### DESCRIPTION OF THE PREFERRED EMBODIMENT

An embodiment of the present invention will be hereinafter described with reference to the accompanying drawings.

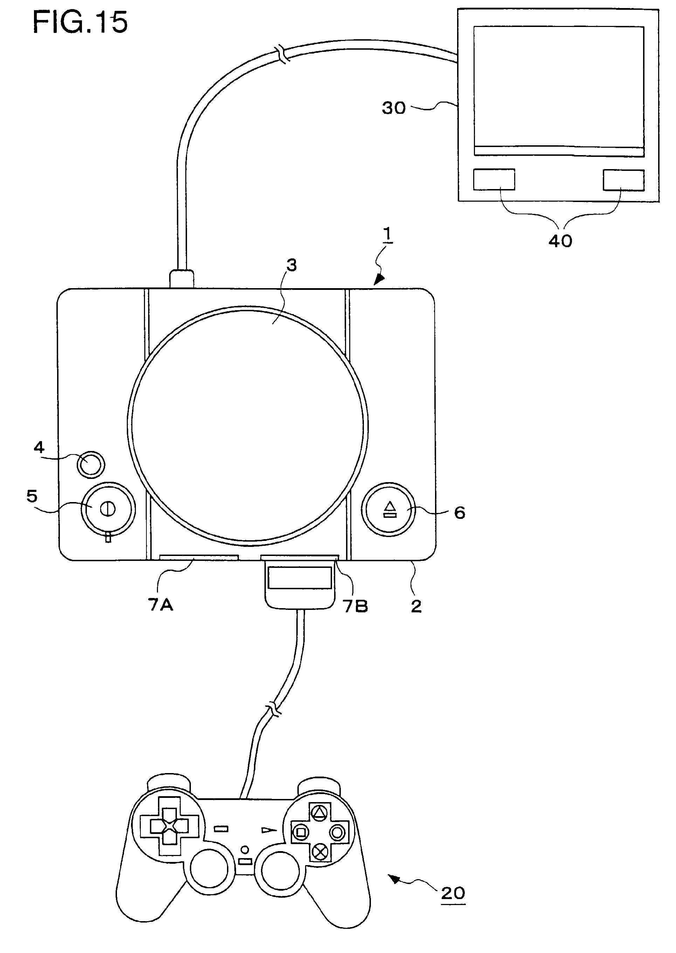

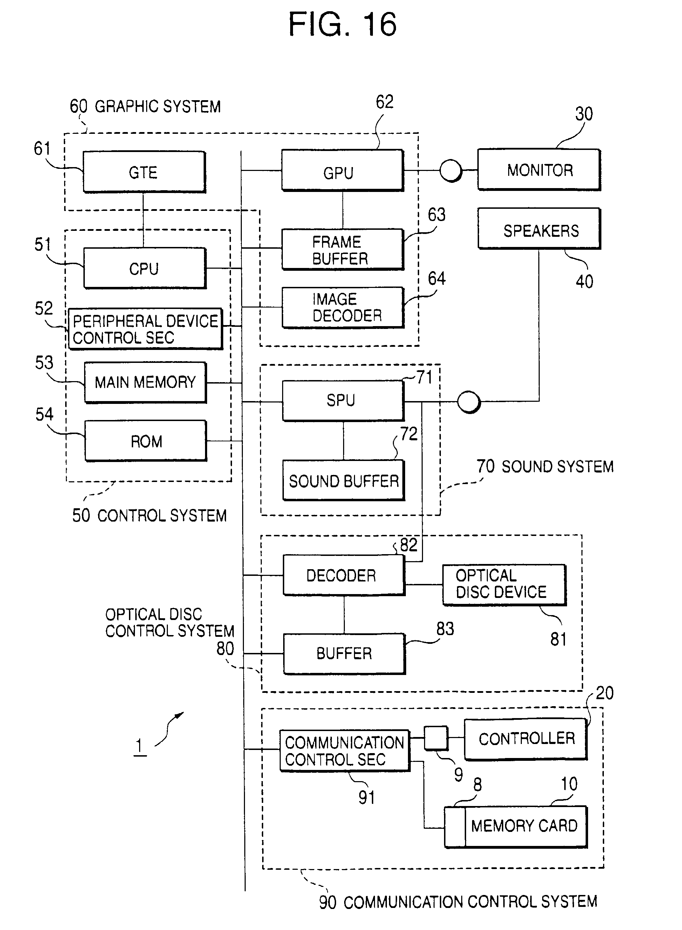

First, an example of an appearance of the entertainment system capable of implementing the embodiment and its outlined example of a hardware configuration will be described with reference to Figs. 15 and 16.

The entertainment system has an appearance as shown in Fig. 15, for example. The entertainment system 1 reads out a game program that is recorded on an optical disc such as a CD-ROM and executes the program according to operations of a player.

A main body 2 of the entertainment system 1 is provided with a disc mounting section 3 in which an optical disc where a game program is recorded is to be mounted, a reset switch 4 for resetting a game arbitrarily, a power switch 5, a disc operation switch 6 to be operated for mounting of the optical disc, and slots 7A and 7B.

An operation device (controller) 20 can be connected to the slots 7A and 7B. Furthermore, a memory card on/from which game data can be recorded/read out is also mounted on the slots 7A and 7B.

The entertainment system 1 can be connected to a monitor 30 and speakers 40 though they are not shown. Fig. 15 shows an example in which a television set is used as the monitor 30 and the speakers 40.

The entertainment system 1 has an outlined hardware configuration as shown in Fig. 16, for example. The entertainment system 1 is provided with a control system 50 that includes a CPU 51 and its peripheral devices, a graphic system 60 that includes a frame buffer 63 and a GPU 62 for drawing an image in the frame buffer 63, a sound system 70 that includes an SPU (sound processing unit) for generating a musical sound, an effect sound, or the like, an optical disc control system 80 for controlling an optical disc on which a game program is recorded, and a communication control system 90 for controlling input/output of a signal that is supplied from the controller 20 to which an instruction of the player is inputted, and of data from the memory card 10 for storing a game setting, etc.

As shown in Fig. 16, the control system 50 is provided with the CPU 51, a peripheral device control section 52 for performing, a interrupt control, a direct memory access (DMA) transfer control, etc., a main memory 53 comprising a RAM (random access memory), and a ROM (read-only memory) 54 in which an operating system (OS) for managing the main memory 53, the graphic system 60, the sound system 70, etc. is stored.

When the power is applied to the entertainment system 1, the CPU 51 starts to control the entire entertainment system 1, that is, the graphic system 60, the sound system 70, etc., by executing the OS that is stored in the ROM 54.

After the OS is executed, the CPU 51 performs initialization such as an operation check and then executes the game program recorded on the optical disc by controlling the optical disc control system 80. By executing the game program, the CPU 51 controls image display and generation of a musical sound, an effect sound, or the like by controlling the graphic system 60, the sound system 70, etc. according to an instruction of the player.

The graphic system 60 is provided with a GTE (geometry transfer engine) 61 for performing a processing such as coordinate conversion, the GPU 62 for performing a drawing processing according to drawing instructions from the CPU 51, a frame buffer 63 for storing image data that has been drawn by the GPU 62, and an image decoder 64 for decoding compressed and coded image data.

Having, for example, a parallel computation function for performing a plurality of computations in parallel, the GTE 61 can perform computations, such as coordinate conversion, transparent transformation, and light source calculation at high speed in response to a computation request from the CPU 51.

The GPU 62 draws polygons etc. in the frame buffer 63 in accordance with a drawing instruction from the CPU 51.

The frame buffer 63 comprises a dual-port RAM and can perform drawing from the GPU 62 or transferring the image data from the main memory 53, simultaneously with reading the image data for display. The frame buffer 63 is provided with not only a display area from which video signals are outputted to the monitor 30 but also a CLUT area where a color look-up table (CLUT) is stored, which is referred to by the GPU 62 in drawing polygons etc., and a texture area in which textures to be inserted into polygons etc., that are drawn by the CPU 62 after a coordinate conversion in drawing processing.

Controlled by the CPU 51, the image decoder 64 decodes image data of a still picture or a moving picture that is stored in the main memory 53 and stores the decoded image data again in the main memory 53. The decoded image data can be used as a background image after it is stored in the frame buffer 63 by the GPU 62.

The sound system 70 is provided with the SPU 71 for generating a musical sound, an effect sound, or the like in accordance with an instruction from the CPU 51 and a sound buffer 72 in which waveform data or the like is stored by the SPU 71. A musical sound, an effect sound, or the like generated by the SPU 71 is outputted to the speakers 40. The SPU 71 has a function of decoding audio data and a function of reproducing waveform data stored in the sound buffer 72 as it is or after it is modulated.

The optical disc control system 80 is provided with an optical disc device 81 for reading out a game program, data, etc. that are recorded on the optical disc, a decoder 82 for decoding the game program, data, etc., and a buffer 83 for increasing the speed of reading data from the optical disc, by temporarily storing data that has been read out by the optical disc device 81.

The communication control system 90 is provided with a communication control section 91 for controlling a communication with the CPU 51 via a bus. The communication control section 91 is provided with a controller connection portion 9 to which the controller 20 is connected for inputting an instruction from the player, and a memory card insertion portion 8 to which the memory card 10 for storing game setting data etc., is connected.

The controller 20 that is connected to the controller connection portion 9 has a plurality of instruction keys to be operated by the player to input an instruction. The controller 20 transmits a state of the instruction keys to the communication control section 91. The communication control section 91 transmits the received state of the instruction keys to the CPU 51. In this manner, the CPU 51 receives the instruction of the player. The CPU 51 performs processing in accordance with the instruction of the player based on the game program being executed.

When it is necessary to store setting data etc. of the game being executed, the CPU 51 transmits the data to be stored to the communication control section 91. The communication control section 91 writes the data received from the CPU 51 to the memory card 10 that is mounted in the slot of the memory card insertion portion 8.

An example of the appearance of the entertainment system that can implement the present embodiment and the outlined example of the hardware configuration have been described above. It goes without saying that an apparatus that can implement the present embodiment is not limited to the above entertainment system.

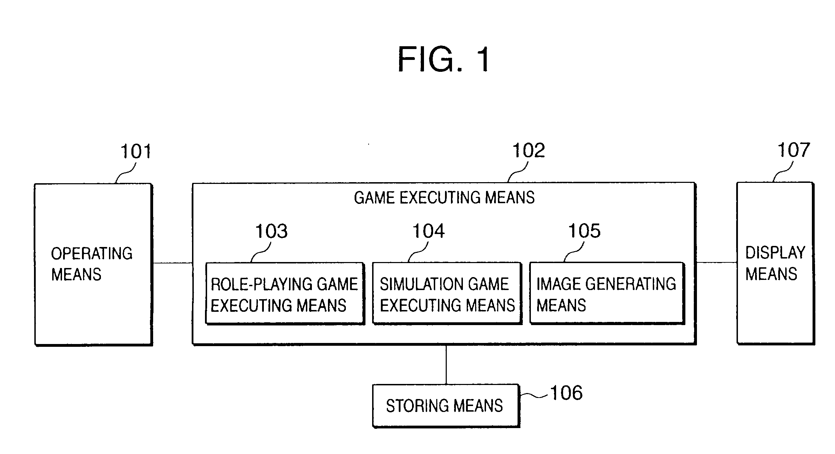

Fig. 1 is a functional block diagram of the main part of a game system according to the embodiment of the present invention. As shown in Fig. 1, the game system is provided with an operating means 101 through which the player inputs various instructions, a game executing means 102 for accepting operation data from the operating means 101, a storing means 106 in which a game program, game data, etc. are stored, and a display means 107 for displaying a game picture.

The game executing means 102 is provided with a role-playing game executing means 103 for proceeding with a game according to a predetermined scenario, a simulation game executing means 104 for creating a world that is unique to the player, and an image generating means 105. The role-playing game executing means 103 and the simulation game executing means 104 perform processes for proceeding with a role-playing game and a simulation game, respectively, based on instructions of the player that are received from the operating means 101 and the game programs, game data, etc. that are stored in the storing means 106. The image generating means 105 performs a process of generating an image to be displayed as a game picture and displaying it on the display means 107. The game executing means 102 manages the role-playing game progressing process that is performed by the role-playing game executing means 103 and the simulation game progressing process that is performed by the simulation game executing means 104 by correlating those with each other.

The game executing means 102 can be implemented by hardware of the CPU 51, the GPU 62, etc. and the storing means 106 can be implemented by hardware such as an optical disc, for example, a CD-ROM or a DVD, or an external storage device such as a hard disk.

The display means 107 can be implemented with a monitor using a CRT (cathode-ray tube) or the like, such as a television set. The display means 107 may be either integrated with or separated from the entertainment system main body 2 depending on the form of entertainment system 1, that is, depending on whether the entertainment system 1 is for home use, business use, or some other use.

In this embodiment, the game executing means 102 executes a role--playing game and a simulation game in parallel while correlating those with each other.

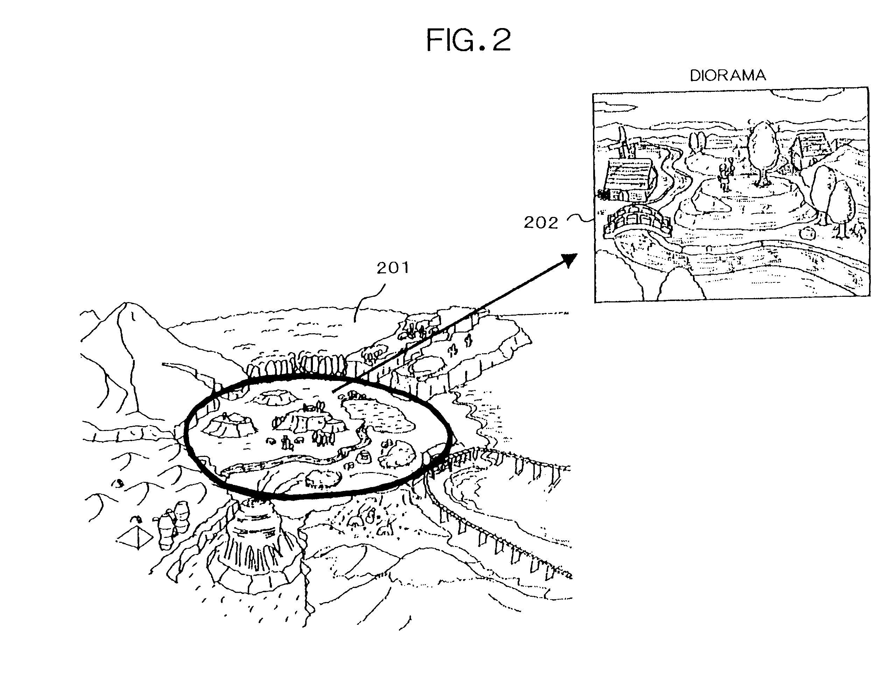

Specifically, in this embodiment, as shown in Fig. 2, the simulation game executingmeans 104 provides aworld (diorama) 202 that can be edited by the player separately from a world 201 that is provided by the role-playing game executing means 103. The simulation game executing means 104 allows the player to construct an object (e.g., a building) in the diorama 202.

Although in the example of Fig. 2 the diorama 202 that can be edited by the player is located at the center of the world 201 that is provided by the role-playing game executing means 103, the invention is not limited to such a case.

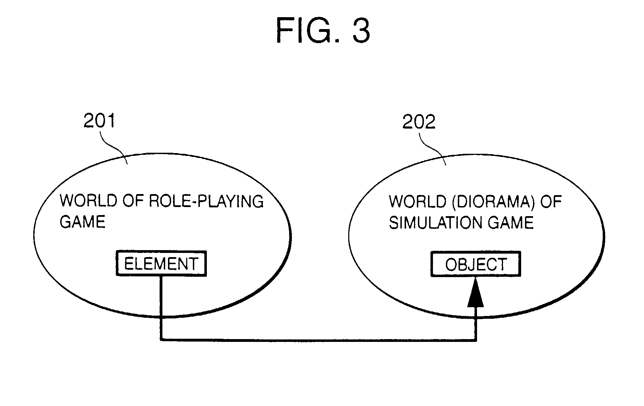

In this embodiment, as shown in Fig. 3, the player can construct an object by using an element that is obtained in the world 201 that is provided by the role-playing game executing means 103, while the player plays the role-playing game according to the scenario. The role-playing game and the simulation game are correlated with each other in this manner.

That is, the player searches for an element by instructing the player character how to act in the world 201 that is provided by the role-playing game executing means 103. Using the element thus obtained, the player can construct an object in the diorama 202, and then the player develops the diorama 202. In this manner, the player can play in both fields of the world 201 and the diorama 202.

In particular, since the player can construct an object at a desired position in the diorama 202, the player can create his/her own diorama 202.

In this embodiment, as a matter of course, to make it possible to create a variety of dioramas 202, plural kinds of objects are prepared and plural kinds of elements are prepared for each object.

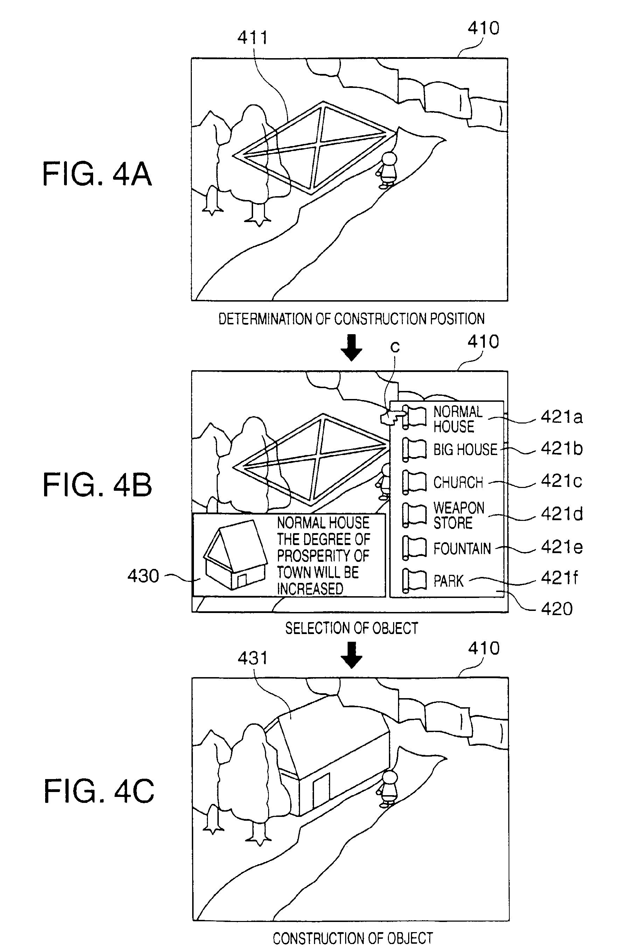

Figs. 4A-4C show a specific example.

Figs. 4A-4C show an example of transitions between game pictures in constructing an object by the player in the diorama 202. Six objects that can be constructed by using an obtained element are displayed as choices 421a-421f in a selection window 420 of a picture 410 of Fig. 4B. In this example, a "normal house" is selected from the six choices 421a-421f by the player and a "normal house" 431 is constructed in a picture 410 of Fig. 4C.

Here, a corresponding relationship between an object and an element is not limited to a one-to-one relationship. A game may be configured in such a manner that two or more elements are needed to construct one object. For example, it is possible to design a game such that an object can be constructed only when two elements, e.g., a draft and materials are obtained.

In this embodiment, a predetermined attribute is defined for each object. It is possible to determine a character corresponding to a selected object out of plural kinds of characters prepared in advance in accordance with its attribute and to allow the determined character to appear in the diorama 202.

As a specific example, by correlating a weapon merchant (character) with a weapon store (object), a player character is allowed to purchase a weapon at a weapon store that has been constructed in the diorama 202. Similarly, by correlating fish (characters) with a pond (object), it is possible to allow the fish to live in a pond that has been constructed in the diorama 202.

With the appearance of a character in the diorama 202 in the above manner, it is possible to provide, in the game system, a different role-playing game executing means other than the role-playing game executing means 103 and to allow the different role-playing game executing means to proceed with a role-playing game in the diorama 202. This allows the player to play a game in a more enjoyable manner.

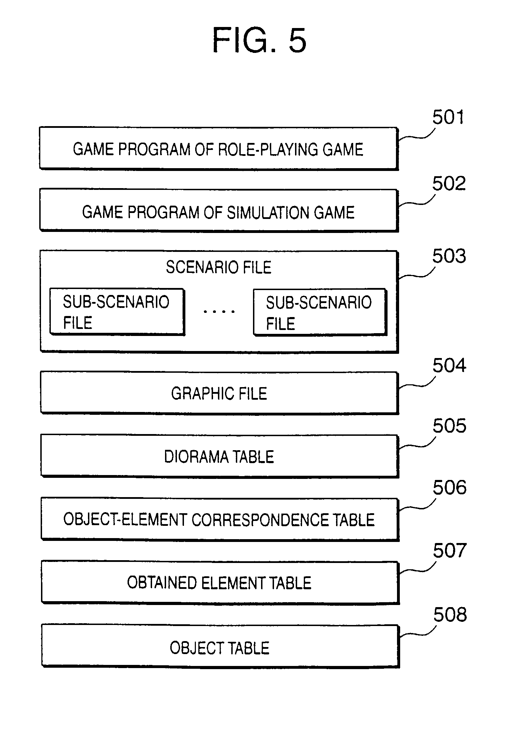

Next, an operation of the embodiment, which enables a role-playing game and a simulation game to be executed in parallel being correlated with each other, will be described in a simplified manner with reference to Figs. 5-10.

Fig. 5 shows an example of storage contents of the storing means 106.

As shown in Fig. 5, in addition to a game program 501 of a role-playing game and a game program 502 of a simulation game, at least a scenario file 503, a graphic file 504, a diorama table 505, an object-element correspondence table 506, an obtained element table 507, and an object table 508 are stored in the storing means 106.

The scenario file 503 consists of a plurality of sub-scenario files, and is referred to by the role-playing game executing means 103 that executes the game program 501.

The role-playing game executing means 103 refers to sub-scenario files one after another from a sub-scenario file that should be referred to first and proceeds with a role-playing game according to a sub-scenario file being referred to. In the role-playing game that is proceeding according to a sub-scenario file being referred to, the role-playing game executing means 103 generates an event and determines a sub-scenario file to be referred to next in accordance with an instruction that the player inputs for the event. It is preferable that the role-playing game executing means 103 presents a diorama 202 in an initial state to the player when the role-playing game proceeds according to the sub-scenario file that should be referred to first.

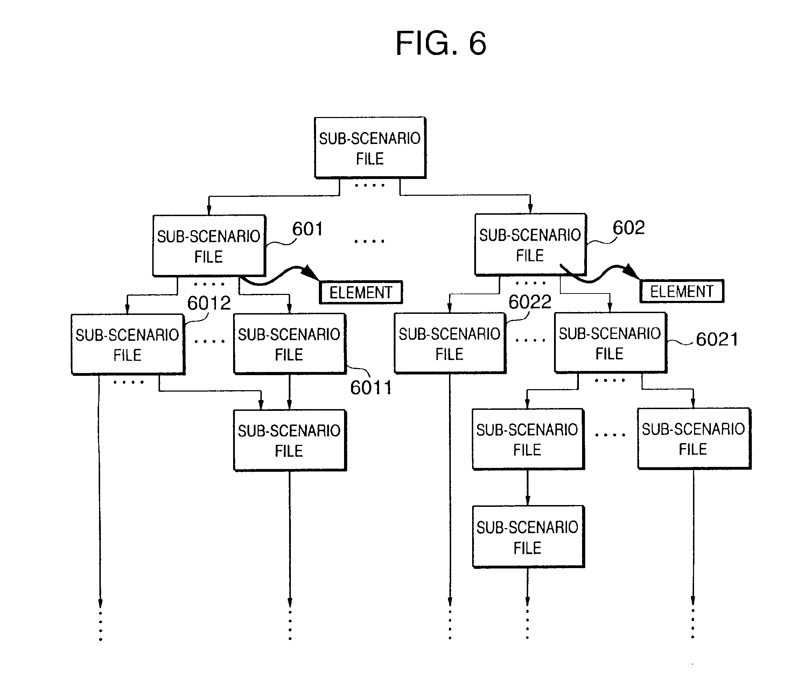

As a way of example, Fig. 6 shows how the sub-scenario files are referred to in a process of proceeding with a role-playing game.

In this embodiment, it is designed as for a predetermined sub-scenario file, an element is fixed in advance, and the element is provided in an event that occurs in a role-playing game according to the predetermined sub-scenario file concerned.

For example, it is possible to configure a game in such a manner that a predetermined element can be obtained when a player character has defeated an opponent character. Or a game may be configured in such a manner that a treasure box containing a predetermined element is prepared and a player character can obtain the element when the player has found the treasure box.

In the example of Fig. 6, it is shown that sub-scenario files 601 and 602 are the files that can obtain an element. Even with a sub-scenario file that can obtain an element such as the sub-scenario file 601, there may be a case where a player character cannot obtain the element depending on an instruction that the player inputs for an event that occurs during a role-playing game according to the sub-scenario file. This is specifically explained in the following, i.e., Fig. 6 shows an example that during the role-playing game according to the sub-scenario 602, an event occurs in which an element can be obtained irrespective of whether a sub-scenario file 6021 or 6022 will be referred to next. Fig. 6 also shows an example that during the role-playing according to the sub-scenario 601, an event occurs in which the player character can obtain an element if a sub-scenario file 6011 is referred to next, but an element cannot be obtained if a sub-scenario file 6012 is referred to next.

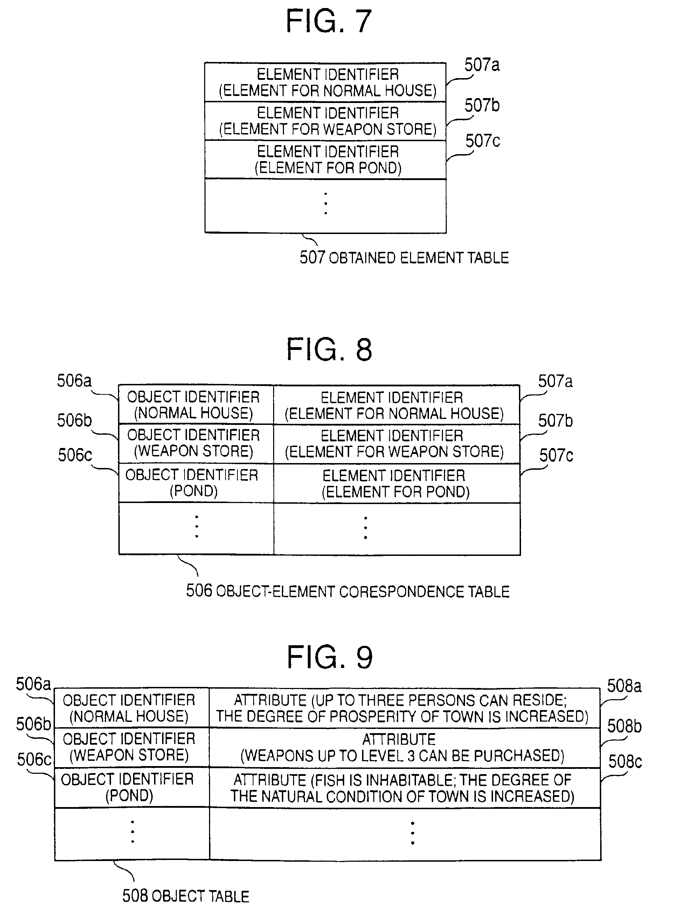

Returning to Fig. 5, the obtained element table 507 is a table for storing the identifiers of elements that have been obtained by the player. For example, as shown in Fig. 7, identifiers 507a, 507b, 507c, ... of obtained elements are registered therein.

As shown in Fig. 7, the role-playing game executing means 103 stores identifiers 507a, 507b, 507c, ... of elements that have been obtained by the player (i.e., the player character) in the obtained element table 507. The obtained element table 507 is referred to by the simulation game executing means 104 that executes the game program 502.

As shown in Fig. 8, the object-element correspondence table 506 is a table in which identifiers 507a, 507b, 507c, ... of elements that are necessary to construct objects are stored for respective identifiers 506a, 506b, 506c, ... of thoseobjects. As shown in Fig. 9, the object table 508 is a table in which attributes 508a, 508b, 508c, ... of objects are stored for respective identifiers 506a, 506b, 506c, ... of those objects. The object-element correspondence table 506 and the object table 508 are also referred to by the simulation game executing means 104 that executes the game program 502.

In this embodiment, as described above, the diorama 202 is located at the center of the world 201 that is provided by the role-playing game executing means 103. The means for forming the diorama 202 according to instructions of the player is the simulation game executing means 104.

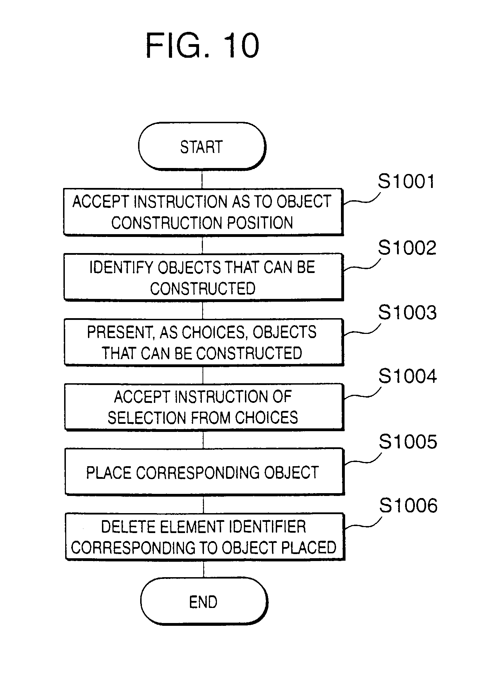

The simulation game executing means 104 arranges objects in the diorama 202 according to instructions of the player. A flow of this operation will be described in a simplified manner with reference to Fig. 10.

As shown in Fig. 10, when, a construction position 411 is specified by the player, for example, as shown in Fig. 4A (S1001), the simulation game executing means 104 refers to the object-element correspondence table 506 and the obtained element table 507 and identifies objects that can be constructed by using an obtained element (S1002).

Next, the simulation game executing means 104 presents the objects that were identified at step S1002 to the player by displaying those as choices 421a-421f in a selection window 420 in a manner shown in Fig. 4B (S1003). When the player places cursor C at one choice in the selection window 420 via the operating means 101, an introductionwindow 430 for introducing the contents of the choice is displayed as shown in Fig. 4B.

When one choice was selected via the operating means (S1004), the simulation game executing means 104 places a corresponding object 431, forexample, as shown in Fig. 4C (S1005). At this timing, the simulation game executing means 104 deletes the element identifier (e.g., the identifier 507a) corresponding to the placed object from the obtained element table 507 (S1006).

In the diorama table 505 as shown in Fig. 5, topographical information of the diorama 202 and information (identifiers, arrangement positions, etc.) of the objects arranged in the diorama 202 are stored. By referring to the diorama table 505, the simulation game executing means 104 may make judgments before placement of an object, whether or not the object can be placed therein, or after placement of the object, the simulation game executing means 104 may add other information to the object that is placed to the diorama table 505.

In the graphic file 504 as shown in Fig. 5, graphic data of characters, objects, elements, backgrounds, etc., are stored together with their identifiers. The graphic file 504 is referred to by the image generating means 105. Specifically, when the simulation game executing means 104 has specified identifiers and display positions of display subjects (objects, characters, etc.) to the image generating means 105, the image generating means 105 refers to the graphic file 504, generates a game picture, and allows the display means 107 to display it. A method for generating game pictures is same as conventional techniques and hence is not described here.

In this embodiment, the diorama 202 in which objects are arranged in such a manner as described above is evolved by the simulation game executing means 104 as time elapses even while a role-playing game progresses by the role-playing game executing means 103. That is, by referring to the object table 508, the simulation game executing means 104 allows a character corresponding to an object to appear in the diorama 202 after a lapse of a predetermined time in accordance with the attribute of the object.

In the embodiment, it maybe possible to provide a variety of outputs by varying characters to appear in accordance with not only the attribute of an object but also a position (considering relationships with neighboring objects, terrain, etc.) where the object has been constructed. Also in this case, a table to be referred to may be prepared in advance and referred to.

For example, in the case where fish is correlated with a pond, by further correlating a resident who likes fishing with a house that is constructed adjacent to the pond, it maybe possible to allow the resident to play fishing. Further, attributes may be made variable. For example, a game may be configured in such a manner that if a pond is constructed adjacent to a volcano, the pond may become a hot spring.

As described above, in the embodiment, the diorama 202 that is a world unique to the player is provided in the world 201 of a role-playing game and hence the player can enjoy the two kinds of games that are correlated with each other. Therefore, attractive and enjoyable games can be provided to the players even if they have experienced a great number of role-playing games.

The embodiment may be modified in such a manner as including a state of the diorama 202 as one of the final goals of the role-playing game. For example, a prosperity degree of the world may be introduced as a value and one of the final goals may be attained in the case where this value is equal to or more than a predetermined value. In this way, it is possible to guide the player how to develop the diorama 202. Viewed from a game manufacturer, it is possible to adjust contents of the state of the diorama 202 as a final goal, so as to decide, as a nature of the game, whether a point of the role-playing game is emphasized or conversely, a point of the simulation game is emphasized.

The embodiment may be modified in such a manner that a size of the diorama 202 is increased every time a predetermined condition is satisfied. For the player side, this enhances the pleasure of increasing the size of the diorama 202. In the case where a role-playing game executing means different from the role-playing game executing means 103 progresses a role-playing game in the diorama 202, the player can enjoy the role-playing game in a wider variety of manners.

The embodiment may be modified in such a manner that the player can freely edit the terrain of the diorama 202 in addition to constructing objects.

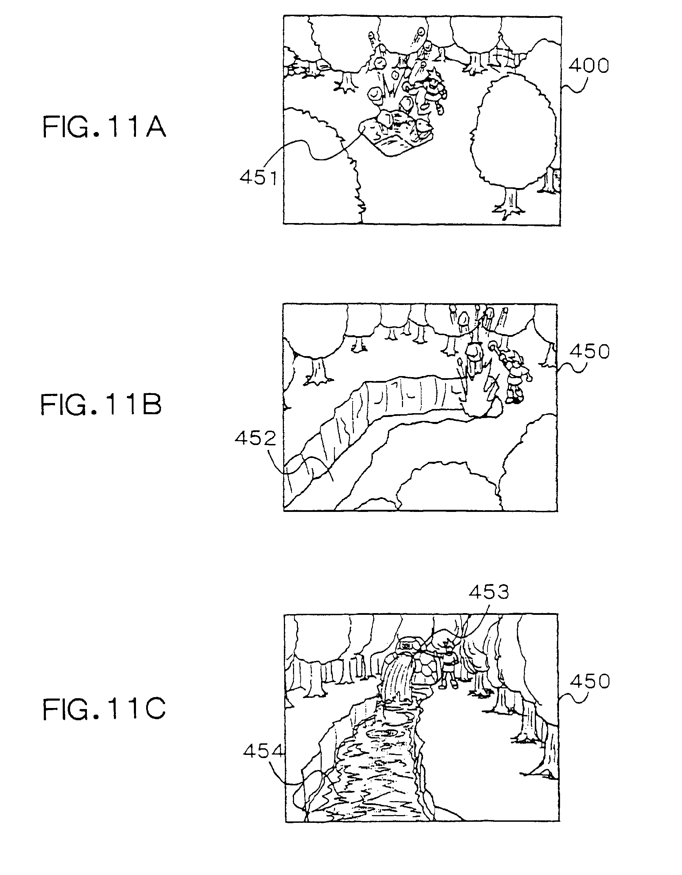

For example, an item (e.g., a magic wand) that enables editing the terrain is given to a player character. In this way, it is possible to construct a river 454 by digging a hole 451 as shown in a picture 450 of Fig. 11A, connecting holes gradually to form a trench 452 as shown in Fig. 11B, and construct a source 453 at the front end of the trench 452 as shown in Fig. 11C. In addition, a sub-game may be provided that enables the player character to enjoy fishing by the river 454 thus constructed.

By giving a player character an item that enables editing of the terrain, the player character is allowed to fight in consideration of the terrain in a fighting scene of defeating an opponent character.

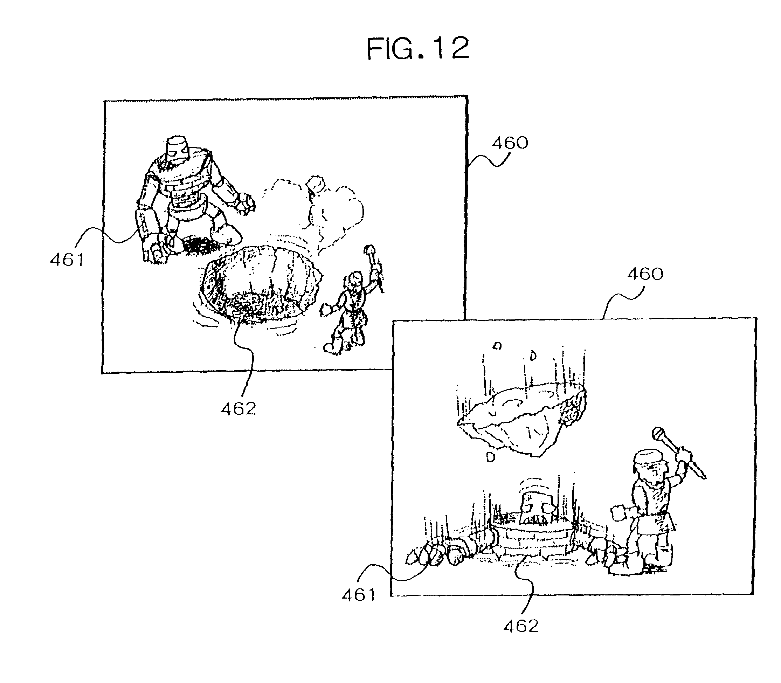

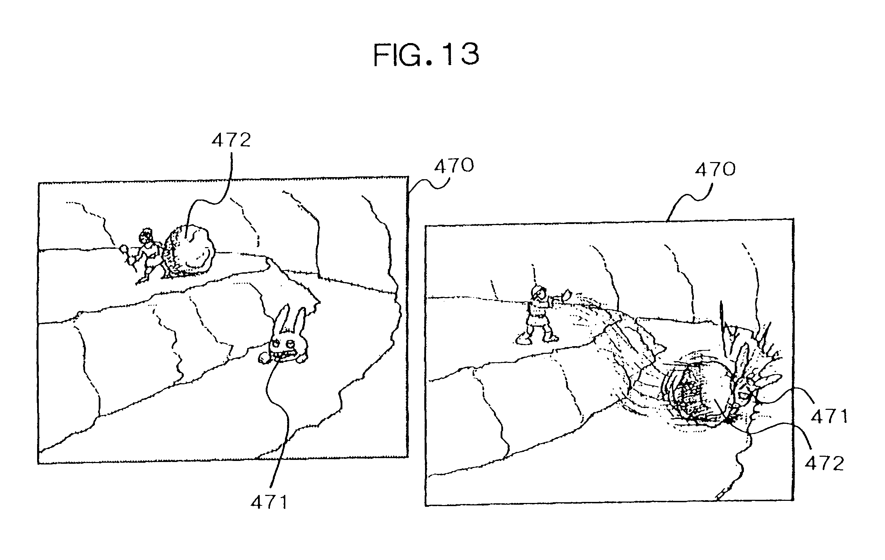

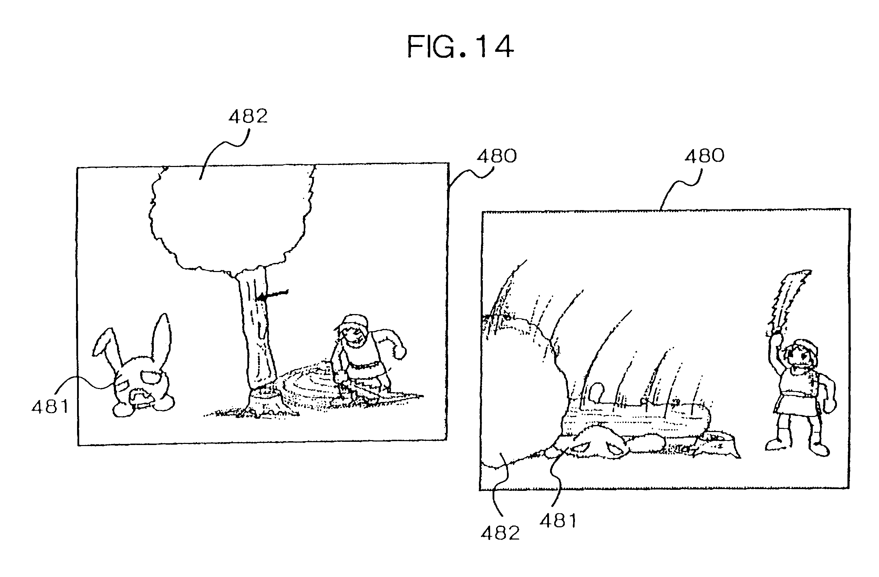

For example, as shown in pictures 460 of Fig. 12, a player character digs a hole 462 in front of an opponent character 461, lures the opponent character 461, and buries the opponent character 461 alive when it falls into the hole 462. Pictures 470 of Fig. 13 show another example in which a player character rolls a rock 472 down to crush an opponent character 471. Pictures 480 of Fig. 14 show still another example in which a player character cuts down a tree 482 to crush an opponent character 481 under the tree 482.

As described above, in the invention, a world unique to a game player is provided in the world of a role-playing game. Therefore, the invention can provide a game that is attractive and enjoyable to even game players even if they have already experienced a large number of role-playing games.

## Claims

1. An entertainment system for proceeding with a game according to operations of a player that are accepted through an operating device, comprising:
role-playing game providing means for providing a game of such a type that the game proceeds according to a scenario as a player manipulates a character that is assigned to the player;
simulation game providing means for providing a game of such a type that a world unique to the player is created by placing, in a virtual world, an object that is a component of the virtual world; and
game control means for proceeding with the two games in parallel in such a manner that the two games are correlated with each other.

2. The entertainment system according to claim 1, wherein the simulation game providing means accepts an alteration request from the player regarding a terrain of the world created by the player, and provides the terrain thus altered.

3. The entertainment system according to claim 1, wherein the game control means enables the simulation game providing means to use elements that are necessary to place the object as a component of the world, the element being given to the player by the role-playing game providing means, and wherein the simulation game providing means presents the elements to the player in a selectable manner.

4. The entertainment system according to claim 3, wherein the object and the element that are necessary to place the object are in a one-to-one relationship or a one-to-plural relationship.

5. The entertainment system according to claim 3, wherein the simulation game providing means refers to, after placing the object in the virtual world in accordance with an operation of the player, data that correlates the object as a component of the virtual world with a character and allows the character corresponding to the object to appear.

6. A storage medium being readable from an entertainment system, in which a program is stored for allowing the entertainment system to execute a process for proceeding with a game according to operations of a player, which are accepted through an operation device, the program allowing the entertainment system to execute:
a role-playing game executing process for providing a game of such a type that the game proceeds according to a scenario as a player manipulates a character that is assigned to the player;
a simulation game executing process for providing a game of such a type that a world unique to the player is created by placing, in a virtual world, an object that is a component of the virtual world; and
a game control process for proceeding with the two games in parallel in such a manner that the two games are correlated with each other.

7. The storage medium according to claim 6, wherein the simulation game executing process includes a step of accepting an alteration request from the player for a terrain of the world created by the player and providing the terrain thus altered.

8. The storage medium according to claim 6, wherein said game control process enables the simulation game executing process to use elements that are necessary to place the object, which are given to the player in the role-playing game executing process, and wherein the simulation game executing process presents the elements to the player in a selectable manner.

9. The storage medium according to claim 8, wherein the object and element that are necessary to place the object are in a one-to-one relationship or a one-to-plural relationship.

10. The storage medium according to claim 8, wherein the simulation game executing process refers to, after placing the object in the virtual world in accordance with an operation of the player, data that correlates the object as a component of the virtual world with a character and allows the character corresponding to the object to appear.

11. An entertainment system having a game executing means for reading out a program from a mounted storage medium, the entertainment system being connected to an operating device for receiving an operating instruction and to a display device for displaying an image, wherein,
said game executing means comprising:
a first game progressing means for allowing a character appearing in a game to act in accordance with the operating instruction received by the operation device, a predetermined element in the game becomes available for the player in the case where the character takes a predetermined action; and
a second game progressing means, wherein the element that becomes available in said first game progressing means is displayed in a selectable manner, and upon receipt of a selection, the element thus selected is placed in a virtual world that is generated in the entertainment system, so as to make a component of the virtual world.
